# EUROPEAN PATENT APPLICATION

(11) **EP 4 582 289 A1**
(43) Date of publication of application: **09.07.2025**
(21) Application number: 24219728.3
(22) Date of filing: 13.12.2024
(51) Int. Cl.: B60L 7/02, B60K 7/00, B60L 7/22

(54) **AUTOMOBILE PROVIDED WITH AN ENERGY DISSIPATOR DEVICE**

(30) Priority: 13.12.2023 IT 202300026574
(71) Applicant: FERRARI S.p.A., 41100 Modena (IT)
(72) Inventor: FAVARETTO, Fabrizio, 41100 MODENA (IT)
(74) Representative: Studio Torta S.p.A.

(57) **Abstract**

An automobile (1) having: a frame (2) provided with a plurality of metal elements (9) interconnected with one another; at least one drive wheel (4); at least one electric motor (5) connected to the drive wheel (4); an electronic power converter (7) which controls the electric motor (5); and a dissipator device (10), which is connected to the electronic power converter (7), is configured to dissipate electrical energy and has at least one electrical resistance (11) which is configured to generate heat through Joule effect and is thermally coupled to at least one corresponding metal element (9) of the frame (2) to transmit heat, through conduction, to the corresponding metal element (9).

## Description

### CROSS-REFERENCE TO RELATED APPLICATIONS

This patent application claims priority from Italian patent application no. 102023000026574 filed on December 13, 2023, the entire disclosure of which is incorporated herein by reference.

### TECHNICAL FIELD

The present invention relates to an automobile.

### PRIOR ART

Traditionally, an automobile is provided with mechanical brakes (disc or, less frequently, drum) which dissipate the kinetic energy possessed by the automobile, transforming it into heat.

In an electric automobile, it is always sought to brake the automobile through what is called regenerative braking, which is carried out using the electric machine connected to the drive wheels as a generator so that it absorbs mechanical energy (i.e., the kinetic energy possessed by the automobile) to generate electrical energy which is stored in the storage system of the automobile.

Recently, to reduce costs, weight and footprint, it has been proposed to eliminate the mechanical braking system which acts on the rear wheels in an electric vehicle with rear drive so that, when necessary, only the braking torque generated by the electric machine acts on the rear wheels. However, for safety (i.e., to ensure that electrical braking is always available in an emergency), this solution requires the presence of a dissipator device which is capable of dissipating the impulsive electrical energy (i.e., of high power and short duration) which is produced during emergency braking and which cannot be absorbed by the storage system of the automobile (for example because the storage system is fully charged).

Generally, a dissipator device comprises an electrical resistance which converts electrical energy into heat through Joule effect and is cooled by air; however, this type of dissipator device is particularly cumbersome and requires a constant flow of air for heat disposal (i.e., the dissipator device must be in communication with an air intake obtained through the bodywork of the automobile).

Patent RU2688563C1 describes a self-propelled work vehicle in which an internal combustion engine drives an electric generator which powers two electric motors connected to the drive wheels; in case of need, the electric motors can also be used as generators to perform regenerative braking. A braking resistance is provided which converts the electrical energy generated during regenerative braking into thermal energy and is cooled by the transfer of thermal energy to components of the self-propelled work vehicle.

### DESCRIPTION OF THE INVENTION

The object of the present invention is to provide an automobile provided with an energy dissipator device which is free from the above-described drawbacks and, at the same time, is simple and cost-effective to manufacture.

According to the present invention, an automobile provided with an energy dissipator device is provided, as claimed in the appended claims.

The claims describe preferred embodiments of the present invention forming an integral part of the present description.

### BRIEF DESCRIPTION OF THE DRAWINGS

The present invention will now be described with reference to the accompanying drawings, which illustrate a non-limiting example embodiment thereof, wherein:
- Figure 1 is a plan and schematic view of an automobile made according to the present invention and provided with at least one energy dissipator device;
- Figure 2 is a schematic and perspective view of a frame of the automobile of Figure 1;
- Figure 3 is a schematic view of a dissipator device of Figure 1; and
- Figure 4 is a schematic view of a further dissipator device of Figure 1.

### PREFERRED EMBODIMENTS OF THE INVENTION

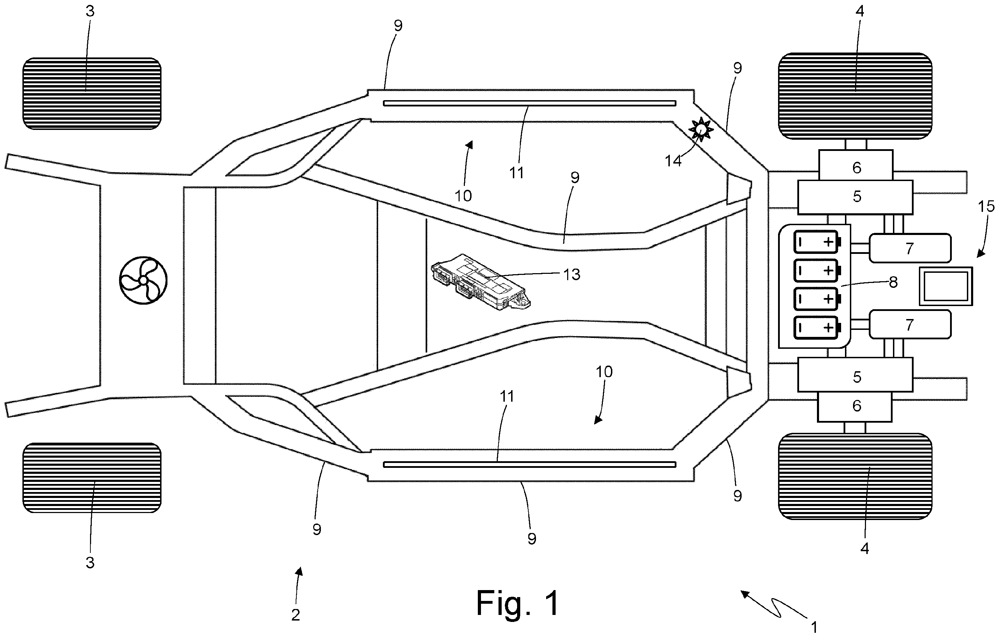

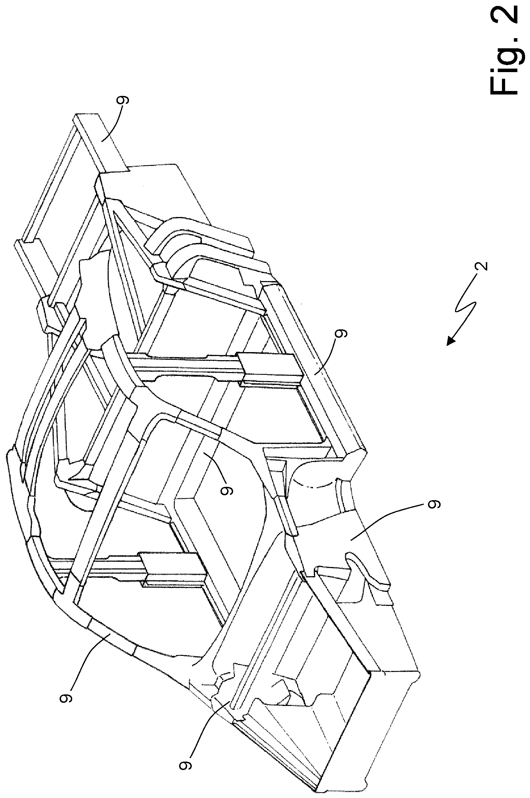

In Figure 1, the reference numeral 1 indicates, as a whole, an automobile comprising a frame 2 (also schematically illustrated in Figure 2), which supports a pair of front wheels 3 and a pair of rear drive wheels 4.

As illustrated in Figure 1, the automobile 1 has electric traction (propulsion) and comprises two electric motors 5, each of which is connected to a corresponding rear drive wheel 3 by means of a mechanical transmission 6 (e.g., comprising a planetary gear train). Each electric motor 5 is controlled by a corresponding electronic power converter 7 which provides an alternating electrical voltage to the corresponding stator winding and exchanges electrical energy with a storage device 8.

As illustrated in Figures 1 and 2, the frame 2 comprises a set of box-shaped metal elements 9 (i.e., hollow and thus internally empty) interconnected with one another; such metal elements 9 consist, for example, of internally hollow linear bars which are made of light metal alloy (generally aluminium-based), are made by extrusion, and are joined to one another by welding at structural nodes preferably defined by junction bodies.

As illustrated in Figure 1, the automobile 1 comprises a dissipator device 10 which is connected to the electronic power converters 7 and is configured to dissipate (absorb) electrical energy; that is, the dissipator device 10 is capable of absorbing high electrical power (in the order of hundreds of kW) for a short time (in the order of a few seconds).

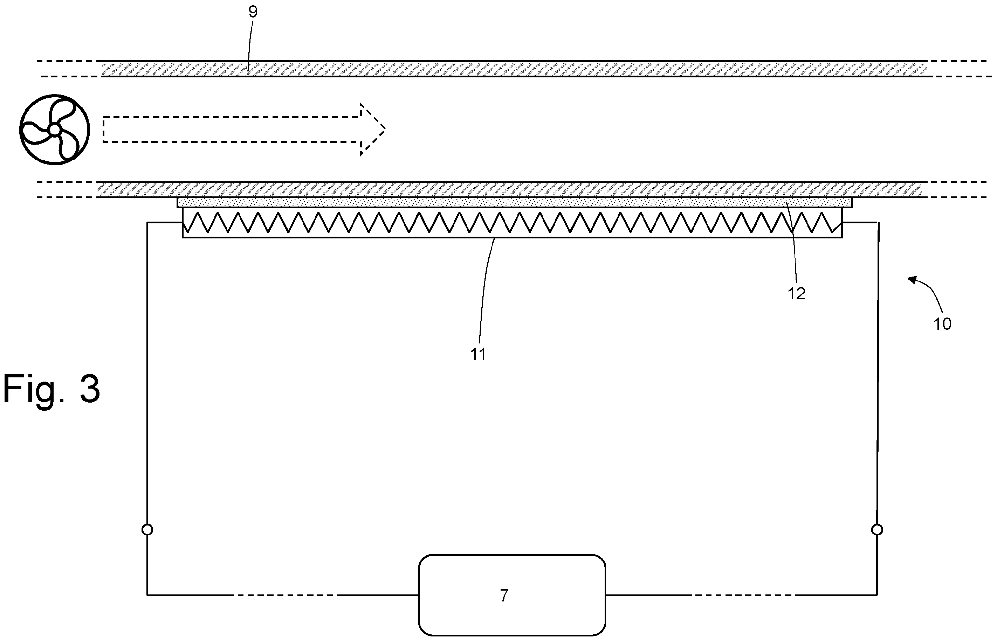

As best illustrated in Figure 3, the dissipator device 10 comprises at least one electrical resistance 11 which is configured to be crossed by an electric current, generating heat through Joule effect, and is thermally coupled to at least one corresponding metal element 9 of the frame 2 to transmit heat through conduction to the corresponding metal element 9; such heat is transmitted through thermal conduction to the metal element 9 of the frame 2 which in turn transfers it through thermal conduction to the entire frame 2. That is, the electrical resistance 11 is configured to generate heat through Joule effect as it is passed through by an electric current and to transmit the heat to the corresponding metal element 9 of the frame 2.

The electrical resistance 11 can be arranged outside the corresponding metal element 9 of the frame 2 and thus be fixed to an outer surface of the corresponding metal element 9 of the frame 2; alternatively, the electrical resistance 11 can be arranged inside the corresponding metal element 9 of the frame 2 and thus be fixed to an inner surface of the corresponding metal element 9 (in this embodiment, the presence of the electrical resistance 11 does not increase the external footprint of the frame 2 but inserting the electrical resistance 11 inside the corresponding metal element 9 of the frame 2 is much more complex).

Generally, the dissipator device 10 comprises a plurality of electrical resistances 11 which are connected to one another in series and/or in parallel and are thermally coupled to corresponding metal elements 9 of the frame 2. Preferably, the electrical resistances 11 are at least partially connected to one another in parallel so that the interruption (breakage) of an electrical resistance 11 does not completely affect the operation of the dissipator device 10; to this end, the dissipator device 10 can be oversized to preserve its operation even in the event of interruption (breakage) of an electrical resistance 11.

According to a preferred embodiment, each electrical resistance 11 is directly fixed to a corresponding metal element 9 of the frame 2 by a heat conductor fixing element 12, for example a heat conductor resin or another type of heat conductor adhesive.

As illustrated in Figure 1, the automobile 1 comprises a control unit 13 which supervises the operation of the electric motors 5 (i.e., controls the electronic power converters 7); when the driver requests braking the automobile 1 by operating the brake control, the control unit 13 always tries to perform regenerative braking, which is carried out using the electric motors 5 connected to the rear drive wheels 4 as generators so that they absorb mechanical energy (i.e., the kinetic energy possessed by the automobile 1) to generate electrical energy which is normally stored in the storage device 8.

To reduce costs, weight and footprint, the automobile 1 lacks a mechanical braking system acting on the rear drive wheels 4 so that only the braking torque generated by the electric motors 5 acts on the rear drive wheels 4. This solution requires the presence of the dissipator device 10 which is capable of dissipating the impulsive electrical energy (i.e., of high power and short duration) which is produced during emergency braking and which cannot be absorbed by the storage device 8 (for example because the storage device 8 is fully charged).

According to a preferred embodiment, at least one temperature sensor 14 is provided, which is configured to measure a temperature of a metal element 9 of the frame 2. The control unit 13 is configured to receive and store temperature measurements carried out by the temperature sensor 14 so as to always be able to reconstruct the thermal stresses to which the frame 2 has been subjected due to the heat generated by the dissipator device 10. In particular, the control unit 13 is configured to generate a signal if the temperature measured by the temperature sensor 14 exceeds the alert threshold value.

According to a possible embodiment, at least one cooling fan is provided, which sends a flow of air to the frame 2 (for example, through the hollow parts of the frame 2) and the control unit 13 is configured to activate the cooling fan when the temperature measured by the temperature sensor 14 has exceeded the alert threshold value. In other words, the frame 2 is formed by several hollow parts joined to one another and pneumatically connected and the frame 2 has at least one inlet opening through which the air moved by the fan can enter the frame 2 and at least one outlet opening through which the air can exit the frame 2.

According to a possible embodiment, the generation of the signal following the temperature measured by the temperature sensor 14 having exceeded the alert threshold value has no effect on the control of the automobile 1; that is, the driver is informed of a potentially critical situation without however limiting the maximum braking power that can be generated by the electric motors 5 in any way (and thus continuing to allow the use, when necessary, of the dissipator device 10 despite the possible damage which the frame 2 could suffer due to excess heating).

According to an alternative embodiment, the generation of the signal following the temperature measured by the temperature sensor 14 having exceeded the alert threshold value involves a limitation or prohibition of the use of the dissipator device 10; in particular, depending on how much the temperature measured by the temperature sensor 14 has exceeded the alert threshold value, the use of the dissipator device 10 may be completely disabled or may only be limited. Consequently, the generation of the signal following the temperature measured by the temperature sensor 14 having exceeded the alert threshold value involves a limitation of the maximum braking power that can be generated by the electric motors 5 due to the lack or limited use of the dissipator device 10 (and of course the driver is alerted through the signal that he/she can no longer have the maximum braking power generated by the electric motors 5).

Furthermore, as illustrated in Figure 1, the automobile 1 comprises a further dissipator device 15 which is different and separate from the dissipator device 10, while performing the same function. The dissipator device 15 can be alternative to the dissipator device 10 or can be alongside (e.g., as an emergency reserve) the dissipator device 10.

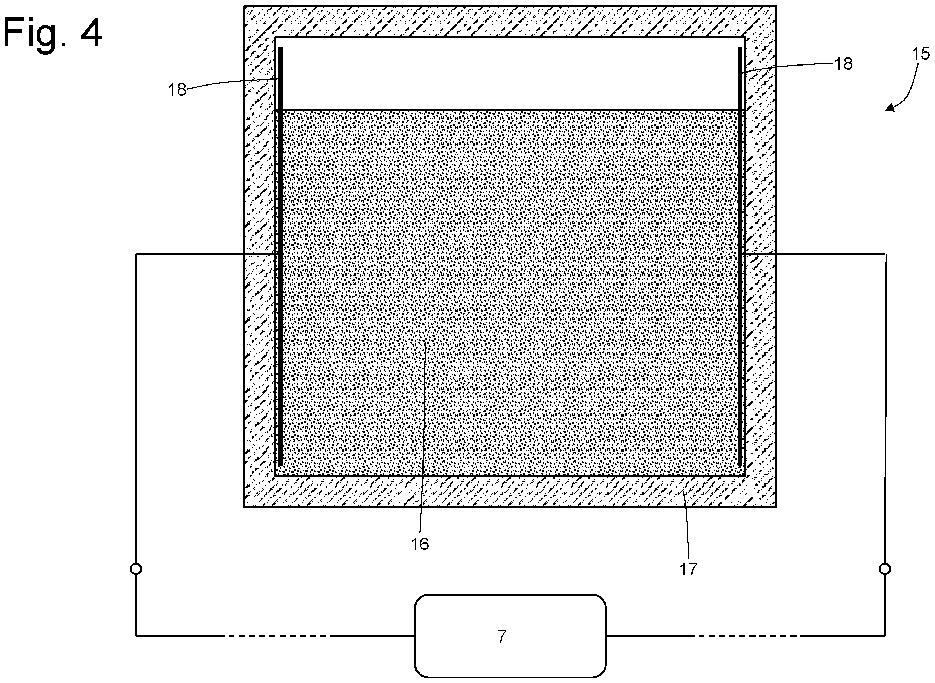

As illustrated in Figure 4, the dissipator device 15 comprises an expendable body 16 which undergoes an endothermic transformation when it is crossed by an electric current (very high and typical of emergency braking at the maximum possible braking power); in thermodynamics, an endothermic process is defined as a transformation which involves an increase in system enthalpy and therefore a transfer of heat from the environment to the system and thus the endothermic transformation of the expendable body 16 requires a supply of heat from the environment, thus absorbing heat.

According to a preferred embodiment, the expendable body 16 undergoes a reversible endothermic transformation when it is crossed by an electric current (very high and typical of emergency braking at the maximum possible braking power) . Preferably, the expendable body 16 undergoes a change of state when it is crossed by a (very high) electric current; typically, the expendable body 16 is in the solid state at room temperature and passes into the liquid state when it is crossed by a (very high) electric current due to the heat generated by the passage of the (very high) electric current. For example, the expendable body 16 is a salt which is at least partially melted when it is crossed by a (very high) electric current. For example, common kitchen salt melts at a temperature of about 800°C and therefore even a modest amount (a few kg) of salt is sufficient to be able to absorb a large amount of energy following its melting.

The dissipator device 10 comprises a thermally insulated container 17 inside which the expendable body 16 (typically salt) is arranged and at least one pair of electrodes 18 which are immersed in the salt and are connected to the electronic power converter 7. Obviously, both the thermal insulation of the container 17 and the electrodes should be able to withstand the temperature which the expendable body 16 (typically salt) can reach during and after its melting without (excessive) damage.

The container 17 comprises a maximum pressure valve which opens (typically towards the roadbed and therefore on the side opposite the passenger compartment) if the internal pressure exceeds a threshold value and avoids the explosion risk of the container 17.

The outer wall of the container 17 is normally metal (for example made of steel which melts at around 1,500°C) and is thermally coupled to at least one corresponding metal element 9 of the frame 2 to transmit heat through conduction to the corresponding metal element 9; thereby, the heat which has been generated inside the container 17 can be slowly disposed of in the frame 2 (which acts as a radiator).

According to an alternative embodiment, the expendable body 16 undergoes an irreversible and destructive endothermic transformation when it is crossed by an electric current (very high and typical of emergency braking at the maximum possible braking power); for example, the expendable body 16 could be a piece of wood-based material which is charred by the passage of a (very high) electric current.

Generally, the dissipator device 10 or 15 can be used exclusively in an emergency (i.e. when the automobile 1 must brake strongly, unexpectedly and unpredictably and the storage device 8 is not capable of absorbing all the electrical energy produced by the braking). However, the dissipator device 15 could also be used during track driving to maximize performance by accepting that, at the end of track use, the expendable body 16 of the dissipator device 15 must be replaced (however, having a modest replacement cost). In other words, an expendable body 16 could be provided for use on a track, which is especially suited for use on tracks and is to be replaced after a few laps (as the qualifying tyres are replaced after a few laps).

In the embodiment illustrated in the accompanying figures, the dissipator device 10 comprises electrical resistances 11 which are configured to generate heat through Joule effect; according to other embodiments, the dissipator device 10 could generate heat in other manners or could exploit a part of the frame 2 as an electrical resistance which generates heat through Joule effect.

In the embodiment illustrated in the accompanying figures, the automobile 1 is an automobile provided with two rear drive wheels 4; according to a different embodiment not illustrated, the road vehicle 1 is a motorcycle provided with a single rear drive wheel.

The embodiments herein described can be combined with one another without departing from the scope of protection of the present invention.

The above-described automobile 1 has numerous advantages.

Firstly, the automobile 1 described above allows safely avoiding the (traditional) mechanical braking system which acts on the rear drive wheels 4, thus allowing a significant saving of weight and space (among other things, the brake disc is an unsprung rotating mass and the brake calliper is an unsprung mass and therefore their absence allows a significant improvement in the dynamics of the automobile 1). This result is obtained thanks to the presence of the dissipator device 10 or 15 which always allows emergency electrical braking to be carried out on the rear drive wheels 4 even when the impulsive electrical energy (i.e., of high power and short duration) which is produced during emergency braking cannot be absorbed by the storage device 8 (for example because the storage device 8 is fully charged).

Furthermore, the dissipator device 10 or 15 is compact and of modest cost: the dissipator device 10 requires only the use of relatively small electrical resistances 11, as it uses the entire frame 2 of the automobile 1 as a radiator and the dissipator device 15 requires a small mass (a few kg) of an easily available expendable body 16 of modest cost.

### LIST OF THE REFERENCE NUMBERS Of THE FIGURES

- 1: automobile
- 2: frame
- 3: front wheels
- 4: rear wheels
- 5: electric motors
- 6: mechanical transmission
- 7: electronic power converter
- 8: storage device
- 9: metal elements
- 10: dissipator device
- 11: electrical resistance
- 12: fixing element
- 13: control unit
- 14: temperature sensor
- 15: dissipator device
- 16: expendable body
- 17: container
- 18: electrodes

## Claims

1. An automobile (1) comprising:
a frame (2) comprising a plurality of metal elements (9) interconnected with one another;
at least one drive wheel (4);
at least one electric motor (5) connected to the drive wheel (4);
an electronic power converter (7), which controls the electric motor (5);
a storage device (8) configured to store electrical energy and connected to the electronic power converter (7); and
a dissipator device (10), which is connected to the electronic power converter (7) and is configured to dissipate electrical energy;
the automobile (1) is **characterized in that** the dissipator device (10) is configured to generate heat and is thermally coupled to at least one corresponding metal element (9) of the frame (2) to transmit heat to the corresponding metal element (9).

2. The automobile (1) according to claim 1, wherein the dissipator device (10) comprises at least one electrical resistance (11), which is configured to generate heat through Joule effect and is thermally coupled to at least one corresponding metal element (9) of the frame (2) to transmit heat, through conduction, to the corresponding metal element (9).

3. The automobile (1) according to claim 2, wherein the electrical resistance (11) is directly fixed to the corresponding metal element (9) of the frame (2) by means of a heat conductor fixing element (12).

4. The automobile (1) according to claim 2 or 3, wherein the dissipator device (10) comprises a plurality of electrical resistances (11), which are thermally coupled to corresponding metal elements (9) of the frame (2) and are preferably connected to one another at least partly in parallel.

5. The automobile (1) according to claim 2, 3 or 4, wherein the electrical resistance (11) is fixed to an outer surface of the corresponding metal element (9) of the frame (2).

6. The automobile (1) according to one of the claims from 2 to 5, wherein:
at least some metal elements (9) of the frame are box-shaped and internally hollow; and
the electrical resistance (11) is arranged inside the corresponding metal element (9) of the frame (2) and is fixed to an inner surface of the corresponding metal element (9).

7. The automobile (1) according to one of the claims from 1 to 6 and comprising at least one temperature sensor (14), which is configured to measure a temperature of a metal element (9) of the frame (2).

8. The automobile (1) according to claim 7 and comprising a control unit (13) configured to receive temperature measurements carried out by the temperature sensor (14) and to compare the temperature measurements carried out by the temperature sensor (14) with at least one alert threshold value.

9. The automobile (1) according to claim 8, wherein the control unit (13) is configured to generate a signal, if the temperature measured by the temperature sensor (14) exceeds the alert threshold value.

10. The automobile (1) according to claim 8 or 9, wherein the control unit (13) is configured to limit or prevent the use of the dissipator device (10) if the temperature measured by the temperature sensor (14) exceeds the alert threshold value.

11. The automobile (1) according to claim 8, 9 or 10, wherein:
at least one cooling fan is provided which sends a flow of air to the frame (2), in particular through hollow parts of the frame (2); and
the control unit (13) is configured to activate the cooling fan if the temperature measured by the temperature sensor (14) exceeds the alert threshold value.

12. The automobile (1) according to one of the claims from 1 to 11, wherein the drive wheel (4) is not coupled to any mechanical brake and the braking of the drive wheel (4) is carried out by only having the electric motor (5) operate as generator.
